# EUROPEAN PATENT SPECIFICATION

(11) **EP 3 451 324 B1**
(45) Date of publication and mention of the grant of the patent: **01.09.2021**
(21) Application number: 17806114.9
(22) Date of filing: 06.03.2017
(51) Int. Cl.: G09G 5/00, G06F 3/147, G06F 1/16, G09G 5/36, H04M 1/02

(54) **MOBILE TERMINAL**
MOBILES ENDGERÄT
TERMINAL MOBILE

(30) Priority: 01.06.2016 JP 2016109828
(43) Date of publication of application: 06.03.2019
(73) Proprietor: NTT Docomo, Inc., Tokyo 100-6150 (JP)
(72) Inventor: OHATA, Maki, Tokyo 100-6150 (JP); TAKIMOTO, Makoto, Tokyo 100-6150 (JP); KIMURA, Shinji, Tokyo 100-6150 (JP)
(74) Representative: Viering, Jentschura & Partner mbB Patent- und Rechtsanwälte
(86) International application number: PCT/JP2017/008779
(87) International publication number: WO 2017/208552

(56) References cited:
- WO-A1-2008/062532
- WO-A1-2014/064799
- JP-A- 2005 321 702
- JP-A- 2006 308 911
- US-A1- 2005 176 470
- US-A1- 2013 201 208

## Description

### Technical Field

The present invention relates to a mobile terminal capable of storing a flexible display in a roll form.

### Background Art

Patent Literature 1 describes a screen expansion and contraction type tablet in which a flexible display is stored in a roll form and the flexible display is drawn out at the time of use. This tablet can have a structure in which a screen is automatically stored at the time of contracting the screen by providing a mainspring and attaching the mainspring in a direction in which a spring force is accumulated at the time of drawing out the screen or a structure in which a storing force assists and the screen is smoothly stored.

### Citation List

### Patent Literature

[Patent Literature 1] Japanese Unexamined Patent Publication No. 2014-72884

JP 2005 321702 A, US 2013/201208 A1 and US 2005/176470 A1 disclose the same technical solution being that a flexible display is rounded to a cylinder shape and the size of the image display range is calculated and an image is displayed on the drawer part of said image display surface by the size of the calculated image display range.

### Summary of Invention

### Technical Problem

Incidentally, when a function of performing display control for expanding or contracting a display screen according to expansion and contraction of a flexible display is included, re-rendering of a display is performed according to an expansion and contraction operation.

However, there is a problem that re-rendering may constantly be performed when a force is constantly applied to the flexible display by the spring force, as in the technology described in Patent Literature 1. That is, it is conceivable that fine data fluctuation may occur in a sensor value indicating drawing out of the flexible display. Therefore, there is a problem that a display screen may finely blur due to fluctuation in the data.

Therefore, an object of the present invention is to provide a mobile terminal that prevents a display screen from finely blurring in a flexible display enabling expanded and contracted display according to expansion and contraction in order to solve the above problems.

### Solution to Problem

In order to solve the above-described problems, a mobile terminal of the present invention is defined with the features of claim 1.

According to an aspect of the present invention, the control for changing the display size of the display information to be displayed on the flexible display is performed when the variation in the detected sensor value is greater than the range based on the predetermined threshold value. Thus, it is possible to absorb shaking based on a rewinding force and to prevent blurring of the display information. According to another aspect of the present invention, the reference value is updated according to the sensor value and the control for changing the display size is performed on the basis of the reference value and the threshold value. Thus, it is possible to perform appropriate display control without determining that there is display blurring due to the rewinding force even when the flexible display is being slowly drawn out.

Additional features for advantageous embodiments of the present invention are recited in the dependent claims.

In an advantageous embodiment of the present invention, the display control means sets the threshold value according to a state of the flexible display determined on the basis of the sensor value detected by the rotation angle sensor.

According to an aspect of the advantageous embodiment, since the threshold value is set according to the state of the flexible display, it is possible to perform the control for changing the display size according to the state of the flexible display. Generally, the rewinding force for the flexible display varies according to the state of the flexible display. Therefore, by appropriately changing the threshold value according to the state of the flexible display, it is possible to enable appropriate control for changing the display size and to reduce display blurring or an unrefined feeling at the time of changing the display size.

In an advantageous embodiment of the present invention, in a case in which a first value > a second value > a third value, the threshold value is set to the first value when the flexible display is in a contracted state, the threshold value is set to the second value when the flexible display is in an expanded state, and the threshold value is set to the third value when the flexible display is in a maximally expanded state.

According to an aspect of the advantageous embodiment, the threshold value is set to increase in an order of the reduced display state, the expanded state, and the maximally expanded state of the flexible display. Generally, the rewinding force for the flexible display increases in an order of the contracted state, the expanded state, and the maximally expanded state. Therefore, it is possible to perform appropriate control for changing the display size by setting the threshold value according to a magnitude of the rewinding force.

In an advantageous embodiment of the present invention the mobile terminal includes an operation detection means configured to detect whether or not the flexible display is being expanded or contracted, wherein, when the operation detection means detects that the flexible display is being expanded or contracted, the display control means is configured to set the threshold value to a fourth value smaller than the third value.

According to the aspect of the present invention, when the flexible display is being expanded or contracted, the threshold value is set to the fourth value smaller than the third value and the control for changing the display size of the display information is performed. Thus, it is possible to eliminate an unrefined feeling at the time of display control.

In an advantageous embodiment of the present invention the mobile terminal includes an operation detection means configured to detect whether or not the flexible display is being expanded or contracted, wherein, when the operation detection means detects that the flexible display is being expanded or contracted, the display control means is configured to perform control for changing the display size of the display information without using a threshold value.

According to an aspect of the advantageous embodiment, when the flexible display is being expanded or contracted, the control for changing the display size of the display information is performed without using the threshold value. Thus, it is possible to eliminate an unrefined feeling at the time of display control.

### Advantageous Effects of Invention

According to the present invention, it is possible to prevent display information from blurring.

### Brief Description of Drawings

FIG. 1 is an external perspective view of a mobile terminal 100 according to the present embodiment.
FIG. 2 is a block diagram illustrating functions of the mobile terminal 100 according to the present embodiment.
FIG. 3 is a hardware configuration diagram of the mobile terminal 100.
FIG. 4 is a flowchart illustrating a process of a state determination unit 108 of a mobile terminal 100.
FIG. 5 is a flowchart illustrating a display process of an image processing unit 109.
FIG. 6 is a flowchart illustrating a process of switching validity of a set threshold value on the basis of whether or not the mobile terminal 100 is being operated.

### Description of Embodiments

Embodiments of the present invention will be described with reference to the accompanying drawings. Units which are the same are denoted by the same reference numerals, and repeated description will be omitted, if possible.

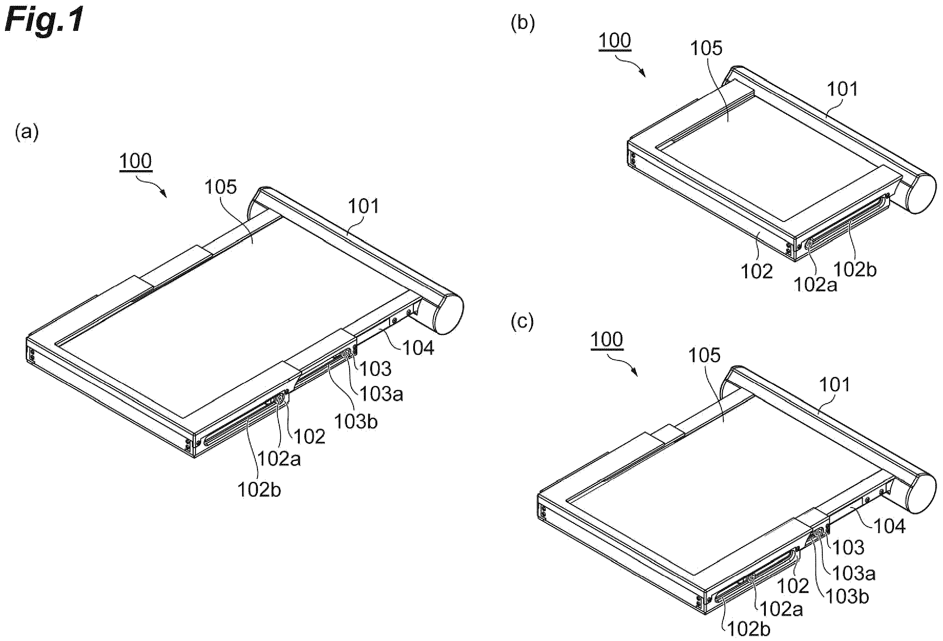

FIG. 1 is an external perspective view of a mobile terminal 100 of the present embodiment. FIG. 1(a) illustrates a maximally expanded state in which a flexible display 105 is drawn out, FIG. 1(b) illustrates a contracted state in which a flexible display 105 is stored, and FIG. 1(c) illustrates an expanded state between the maximally expanded state and the contracted state. As illustrated in FIG. 1, the mobile terminal 100 includes a storage unit 101, frames 102 to 104, holders 102a to 103a, and a flexible display 105.

The storage unit 101 is a unit that stores the flexible display 105 in a roll shape. The storage unit 101 stores the flexible display 105 in a roll shape by applying a force in a direction in which the flexible display 105 remains wound with a mainspring. A user can draw out the flexible display 105 by applying a force greater than an attraction force of the mainspring in a drawing out direction.

The frame 102, the frame 103, and the frame 104 are configured of a pair of frames to be able to hold both upper and lower end portions thereof when a drawing out direction of the flexible display is assumed as a lateral direction. The frames 102, 103, and 104 are configured to be expandable and contractible in the drawing out direction of the flexible display 105 by overlapping each other. A guide groove 102b and a guide groove 103b are formed in the frame 102 and the frame 103.

The frame 102 is connected to the frame 103 using the guide groove 104b, and the holder 104a. More specifically, the frame 102 is connected to the frame 103 by screwing the frame 102 and the frame 103 using the holder 104a so that the frame 104 is slidable along the guide groove 104b formed in the frame 102. The holder 102a is a screw, and a friction coefficient between the frame 102 and the frame 103 is determined according to a tightening state of the screw.

The frame 103 is connected to the frame 104 by screwing the frame 103 using the holder 103a to be slidable along the guide groove 103b formed in the frame 103. The holder 103a is a screw, and a friction coefficient between the frame 103 and the frame 104 is determined according to a tightened state of the screw.

A drawn out state can be maintained in the mobile terminal 100 of the present embodiment using the guide groove 103b to the guide groove 104b formed in the frame 103 and the frame 104 and the holders 102a to 103a.

It should be noted that in the present embodiment, a mechanical configuration is not limited to that illustrated in FIG. 1, and may be a configuration in which a force is applied in a direction in which the roll-shaped flexible display 105 is rewound by a spring or the like, and an expanded state can be maintained.

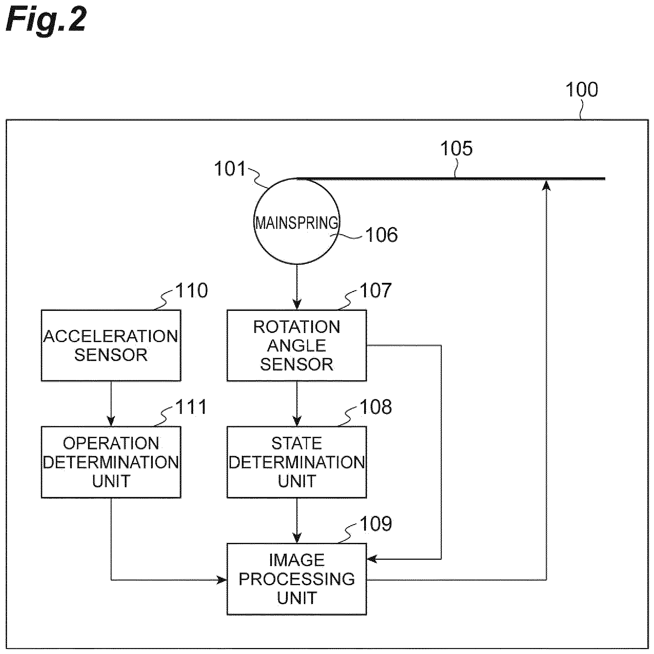

FIG. 2 is a block diagram illustrating functions of the mobile terminal 100 according to the present embodiment. As illustrated in FIG. 2, the mobile terminal 100 includes a mainspring 106, a rotation angle sensor 107 (a detection means), a state determination unit 108, an image processing unit 109 (a display control means), an acceleration sensor 110 (an operation detection means), and an operation determination unit 111, as illustrated in FIG. 2.

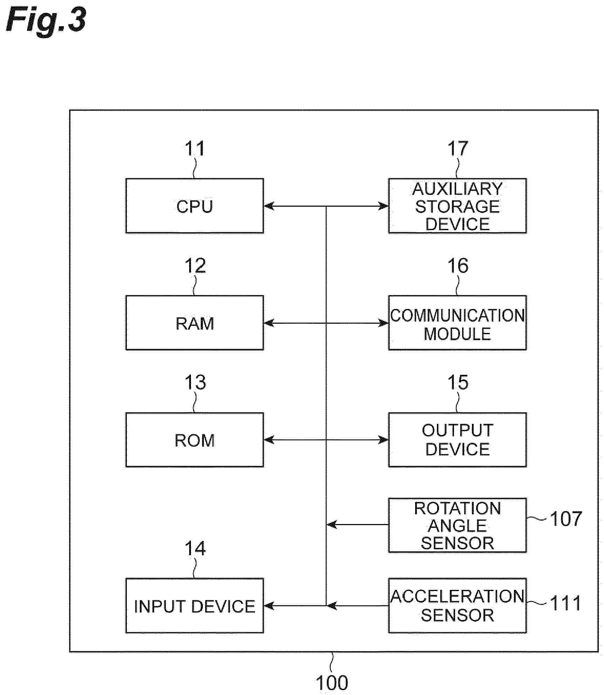

FIG. 3 is a hardware configuration diagram of the mobile terminal 100. As illustrated in FIG. 3, the mobile terminal 100 illustrated in FIG. 2 is physically configured as a computer system including, for example, one or a plurality of CPUs 11, a RAM 12 and a ROM 13 which are main storage devices, an input device 14 such as a keyboard and a mouse which are input devices, an output device 15 such as a display, a communication module 16 that is a data transmission and reception device such as a network card, an auxiliary storage device 17 such as a hard disk or a semiconductor memory, a rotation angle sensor 107, and an acceleration sensor 110, as illustrated in FIG. 3. Each function in FIG. 2 is realized by loading predetermined computer software into hardware such as the CPU 11 and the RAM 12 illustrated in FIG. 3 to operate the input device 14, the output device 15, and the communication module 16 under the control of the CPU 11 and performing reading and writing of data from and to the RAM 12 or the auxiliary storage device 17.

It should be noted that the term "device" can be read as a circuit, device, unit, or the like.

The CPU 11 operates, for example, an operating system to control the entire computer. The CPU 11 may be configured of a central processing unit including an interface with a peripheral device, a control device, an arithmetic device, a register, and the like.

Further, the CPU 11 reads a program (program code), a software module, or data from the auxiliary storage device 17 and/or the communication module 16 to the RAM 12, and executes various processes according to these. As the program, a program that causes the computer to execute at least part of the operations described in the above-described embodiment may be used. For example, the operation determination unit 111, the state determination unit 108, and the image processing unit 109 of the mobile terminal 100 may be realized by a control program stored in the ROM 13 and operated by the CPU 11, and the other functional blocks may be realized similarly. Although a case in which various processes described above are executed by one CPU 11 has been described, the processes may be executed simultaneously or sequentially by two or more CPUs 11. The CPU 11 may be mounted as one or more chips. It should be noted that the program may be transmitted from a network via an electrical communication line.

The ROM 13 may be configured of at least one of an erasable programmable ROM (EPROM), an electrically erasable programmable ROM (EEPROM), and the like. The RAM 12 and the ROM 13 may be referred to as a register, a cache, a main memory (a main storage device), or the like. The RAM 12 and the ROM 13 can store executable programs (program codes), software modules, and the like in order to perform a wireless communication method according to an embodiment of the present invention.

The auxiliary storage device 17 is a computer-readable recording medium and may be configured of at least one of, for example, an optical disc such as a compact disc ROM (CD-ROM), a hard disk drive, a flexible disk, a magneto-optical disc (for example, a compact disc, a digital versatile disc, or a Blu-ray (registered trademark) disc), a smart card, a flash memory (for example, a card, a stick, or a key drive), a floppy (registered trademark) disk, and a magnetic strip. The auxiliary storage device 17 may be referred to as an auxiliary storage device. The above-described storage medium may be, for example, a database, a server, or another appropriate medium including the RAM 12, the ROM 13, and/or the auxiliary storage device 17.

The input device 14 is an input device (for example, a keyboard, a mouse, a microphone, a switch, a button, or a sensor) that receives an input from the outside. The output device 15 is an output device (for example, a display, a speaker, or an LED lamp) that performs output to the outside. It should be noted that the input device 14 and the output device 15 may be integrated (for example, a touch panel).

Further, the respective devices such as the CPU 11, the RAM 12, the ROM 13, and the like are connected by a bus for communicating information. The bus may be configured of a single bus or may be configured of different buses between the devices.

In addition, the mobile terminal 100 may include hardware such as a microprocessor, a digital signal processor (DSP), an application specific integrated circuit (ASIC), a programmable logic device (PLD), and a field programmable gate array (FPGA) or some or all of respective functional blocks may be realized by hardware. For example, the CPU 11 may be mounted in at least one piece of the hardware. Hereinafter, each functional block will be described on the basis of the functional block illustrated in FIG. 3.

The mainspring 106 is a member that continues to apply a force in a direction of rewinding of the flexible display 105 inside the storage unit 101. Accordingly, a predetermined tension is constantly applied to the flexible display 105, which can constantly maintain a flat state with respect to a surface thereof.

The rotation angle sensor 107 is a sensor that detects a rotation angle of shaft rotation, and the rotation angle sensor 107 can output an absolute angle detected at a predetermined sampling rate as a digital numerical value (a sensor value). This sensor value indicates the amount by which the flexible display 105 has been drawn out.

The state determination unit 108 is a unit that determines to what state the flexible display 105 has been drawn out on the basis of the sensor value detected by the rotation angle sensor 107. Specifically, the state determination unit 108 may determine whether the flexible display 105 is in the contracted state in which the flexible display 105 is stored in the storage unit 101, the expanded state in which the flexible display 105 is drawn out from the storage unit 101, or the maximally expanded state in which the flexible display 105 is maximally drawn out. The state determination unit 108 extracts preset threshold values according to the respective states including the contracted state, the expanded state, and the maximally expanded state, and sets the threshold values in the image processing unit 109.

The image processing unit 109 is a unit that performs a process of changing the display size of the display information to be displayed on the flexible display 105 on the basis of the sensor value detected by the rotation angle sensor 107. Specifically, the image processing unit 109 performs drawing out control using a display size according to the sensor value detected by the rotation angle sensor 107, and performs display control for increasing or decreasing the display size.

Here, in the image processing unit 109, a threshold value corresponding to each state is set by the state determination unit 108. This threshold value is used for a determination as to whether or not the sensor value is varying due to shaking caused by the mainspring. The image processing unit 109 determines whether or not the sensor value detected by the rotation angle sensor 107 is in a range of a reference value ± threshold value. Here, when the sensor value is in the range, it is determined that shaking is occurring, and a size change process is not performed. When the sensor value is outside of the range, it is determined that a drawing out operation or a rewinding operation is being performed, and a size change process according to the state is performed.

The reference value will be described herein. The reference value is set to 0 when the flexible display 105 is in the contracted state (that is, at the beginning). This reference value is updated each time the flexible display 105 is drawn out or rewound. That is, when the sensor value is a value exceeding a predetermined width from the reference value, the image processing unit 109 performs a size change process based on the sensor value and resets the reference value.

Specifically, when the sensor value is a value exceeding a width of reference value ± threshold value, a predetermined updating value is added or subtracted according to the sensor value. That is, when the sensor value decreases from the reference value beyond the threshold value, the updating value is subtracted, and when the sensor value increases from the reference value beyond the threshold value, the updating value is added. Thus, the reference value is updated. It is preferable for this updating value to be equal to the threshold value set at that time, but the updating value is not limited to this value.

In such a process, the image processing unit 109 does not perform the process of changing the size of the display information when there is shaking due to the rewinding force of the mainspring 106 in the flexible display 105.

The acceleration sensor 110 is a sensor for determining whether or not the mobile terminal 100 is being operated by a user.

The operation determination unit 111 is a unit that determines whether the mobile terminal 100 is in a state in which the flexible display 105 has been drawn out by the user on the basis of a measurement value measured by the acceleration sensor 110. When the operation determination unit 111 determines that the mobile terminal 100 is in an operating state, the image processing unit 109 performs control so that the set threshold value is set to 0 or the display control based on the threshold value is not performed.

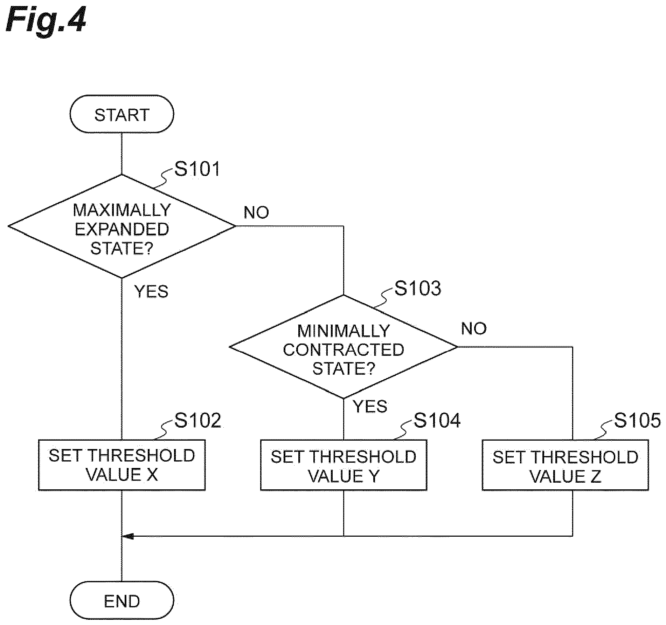

FIG. 4 is a flowchart illustrating a process of the state determination unit 108 of the mobile terminal 100. This flowchart illustrates a process of setting a threshold value in the image processing unit 109.

A sensor value indicating an absolute angle of a rotation axis is detected at a predetermined sampling rate by the rotation angle sensor 107. When the state determination unit 108 determines that the flexible display 105 is in a maximally expanded state (S101), the state determination unit 108 sets a threshold value X in the image processing unit 109 on the basis of the sensor value (S102).

Further, when the state determination unit 108 determines that the flexible display 105 is in a contracted state (S103), the state determination unit 108 sets a threshold value Y (> the threshold value X) in the image processing unit 109 (S104).

Further, when the state determination unit 108 determines that the flexible display 105 is in neither the maximally expanded state nor the contracted state, the state determination unit 108 determines that the state is the expanded state (S103: N), and the state determination unit 108 sets a threshold value Z (X < Z < Y) in the image processing unit 109 (S105).

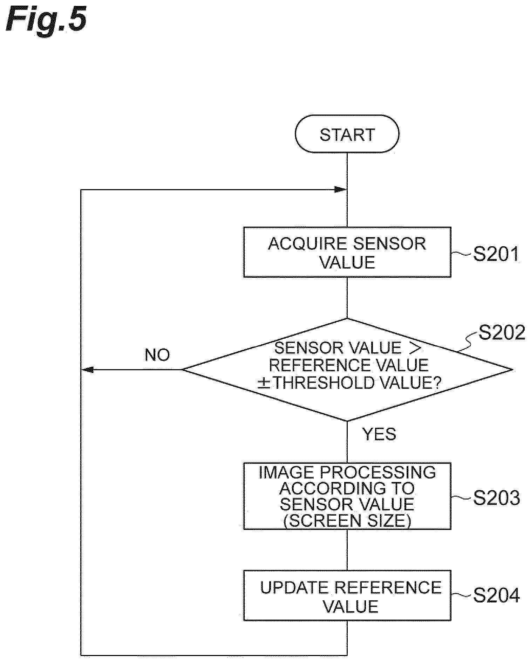

Using the threshold value set in this manner, the image processing unit 109 performs control for changing the display size of the display information. FIG. 5 is a flowchart illustrating a display process of the image processing unit 109.

The sensor value detected by the rotation angle sensor 107 is acquired by the image processing unit 109 (S201). When this sensor value is outside of a range of the reference value set for each drawn out state of the flexible display 105 ± the set threshold value, image processing according to the sensor value is performed (S203). The reference value is updated through addition or subtraction of an updating value according to the sensor value (S204). On the other hand, when the sensor value is in the range of the reference value ± the set threshold value, image processing according to the sensor value is not performed (S202: N).

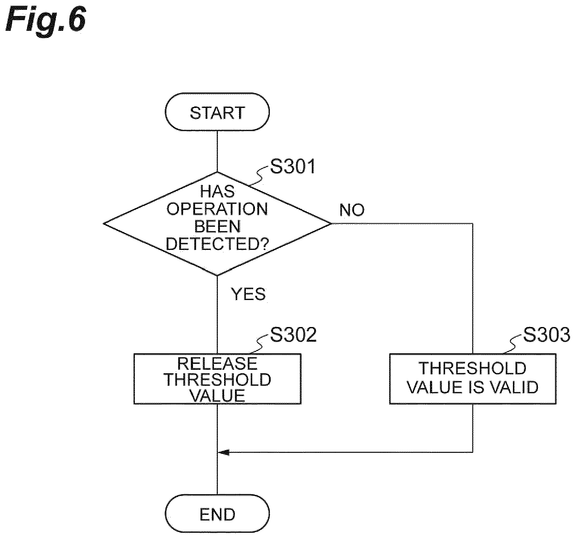

FIG. 6 is a flowchart illustrating a process of switching validity of the set threshold value on the basis of whether or not the mobile terminal 100 is being operated.

When the operation determination unit 111 determines that the flexible display 105 of the mobile terminal 100 is in a drawn out state or in a rewound state (S301: Y), the operation determination unit 111 sets the threshold value set in the image processing unit 109 to 0 or releases the threshold value (S302). Further, when the operation determination unit 111 determines that the flexible display 105 of the mobile terminal 100 is not in the drawn out state or in the rewound state (S301: N), the operation determination unit 111 treats the threshold value set in the image processing unit 109 as being valid (S303).

Accordingly, the image processing unit 109 can switch control as to whether or not the display size of the display information is changed according to a degree of drawing out of the flexible display 105, according to a result of the determination of the operation determination unit 111. Therefore, it is possible to change the size according to the sensor value without making a determination based on the threshold value and perform smooth display control, for example, while the flexible display 105 is being drawn out. It should be noted that the process in FIG. 6 is a process of eliminating a feeling that a redrawing operation in an image display when a drawing out operation or the like is performed is heavy and a frame rate as performance is lowered, that is, a so-called unrefined feeling in an image display. Therefore, this process is not an essential process from the viewpoint of prevention of display blurring.

Next, effects of the mobile terminal 100 of the present embodiment will be described. According to the mobile terminal 100, when a variation in the sensor value detected by the rotation angle sensor 107 is larger than the range based on the predetermined threshold value, the image processing unit 109 performs control for changing the display size of the display information to be displayed on the flexible display 105. Thus, it is possible to absorb shaking based on the rewinding force of the mainspring 106 in the storage unit 101 and to prevent blurring of the display information.

Further, according to the mobile terminal 100, the threshold value is set according to the state (the contracted state, the expanded state, the maximally expanded state) of the flexible display 105, and the image processing unit 109 can perform control for changing the display size according to the state of the flexible display 105. Generally, the rewinding force for the flexible display varies according to the state of the flexible display 105. Therefore, by appropriately changing the threshold value according to the state of the flexible display 105, it is possible to enable the appropriate control for changing the display size and to reduce display blurring or a feeling that a redrawing operation in an image display at the time of changing the display size is heavy and a frame rate as performance is lowered to reduce an unrefined feeling in the image display.

Further, according to the mobile terminal 100, the threshold value is set to increase in an order of the reduced display state, the expanded state, and the maximally expanded state of the flexible display 105. Generally, the rewinding force for the flexible display 105 increases in an order of the contracted state, the expanded state, and the maximally expanded state. Therefore, it is possible to perform appropriate control for changing the display size by setting the threshold value according to a magnitude of the rewinding force. Further, it is also possible to eliminate an unrefined feeling at the time of a drawing out operation by changing the threshold value according to the state of the flexible display 105 in this way.

Further, according to the mobile terminal 100, when the flexible display 105 is being expanded or contracted, the threshold value is set to X4 which is smaller than X3. Thus, it is possible to eliminate an unrefined feeling at the time of display control.

Further, according to the mobile terminal 100, when the flexible display 105 is being expanded or contracted, the control for changing the display size of the display information is performed without using the threshold value. Thus, it is possible to eliminate an unrefined feeling at the time of display control.

Further, according to the mobile terminal 100, the image processing unit 109 updates the reference value according to the sensor value and performs the control for changing the display size on the basis of the reference value and the threshold value. Thus, it is possible to perform appropriate display control without determining that there is display blurring due to the rewinding force even when the flexible display 105 is being slowly drawn out.

Although the present embodiment has been described in detail, it will be obvious to those skilled in the art that the present embodiment is not limited to the embodiment described in the present specification. The present embodiment can be implemented as a modification and modification aspect without departing from the scope of the present invention defined in the claims. Therefore, the description of the present specification is intended for illustration and description and does not have any restrictive meaning for the present embodiment.

An order of process procedures, sequences, flowcharts, or the like in each aspect or embodiment described in the present specification may be exchanged as long as there is no contradiction. For example, for the method described in the present specification, elements of various steps are presented in an exemplary order and are not limited to a presented specific order.

The input and output information and the like may be stored in a specific place (for example, a memory) or may be managed in a management table. Information to be input and output or the like can be overwritten, updated, or added thereto. The output information or the like may be deleted. The input information or the like may be transmitted to another device.

The determination may be made according to a value (0 or 1) represented by one bit, may be made according to a Boolean value (true or false), or may be made according to comparison of numerical values (for example, comparison with a predetermined value).

Each aspect and embodiment described in the present specification may be used alone or in combination or may be switched and used according to execution. Further, notification of predetermined information (for example, notification of "being X") is not limited to a notification that is performed explicitly, and may be performed implicitly (for example, notification of the predetermined information is not performed).

The software can be widely construed as meaning an instruction, an instruction set, a code, a code segment, a program code, a program, a subprogram, a software module, an application, a software application, a software package, a routine, a subroutine, an object, an executable file, an execution thread, a procedure, a function, or the like regardless of the software being referred to as software, firmware, middleware, microcode, or hardware description language or being referred to as any other name.

Further, the software, instructions, and the like may be transmitted and received via a transfer medium. For example, when the software is transmitted from a website, a server, or another remote source using wired technology such as a coaxial cable, an optical fiber cable, a twisted pair, or a digital subscriber line (DSL) and/or wireless technology such as infrared, radio and microwave technology, the wired technology or the wireless technology is included within a definition of the transfer medium.

The information, the signal, or the like described in the present specification may be represented using any of a variety of different technologies. For example, data, instructions, commands, information, signals, bits, symbols, chips, or the like that may be mentioned throughout the above description may be represented by voltages, currents, electromagnetic waves, magnetic fields or particles, optical fields or photons, or any combination thereof.

It should be noted that the terms described in the present specification and/or terms necessary for understanding of the present specification may be replaced with terms having the same or similar meanings.

Further, information, parameters, and the like described in the present specification may be represented by absolute values, may be represented as values relative to predetermined values, or may be represented by other corresponding information. For example, wireless resources may be indicated by an index.

Names that are used for the above parameters are not limited in any respect. In addition, mathematical expressions or the like using these parameters may be different from those explicitly disclosed in the present specification.

The term "determining" used in the present invention may include a wide variety of operations. "Determining" may include, for example, being regarded as "determining" calculating, computing, processing, deriving, investigating, looking up (for example, looking up in a table, database or another data structure), and ascertaining. In addition, "determining" may include being regarded as "determining" receiving (for example, receiving information), transmitting (for example, transmitting information), inputting, outputting, or accessing (for example, accessing data in a memory). In addition, "determining" may include being regarded as "determining" resolving, selecting, choosing, establishing, comparing, or the like. That is, the "determining" may include being regarded as "determining" any operation.

The terms "connected" and "coupled" or any modification thereof means any direct or indirect connection or coupling between two or more elements, and can include one or more intermediate elements being present between two "connected" or "coupled" elements. The coupling or connection between the elements may be physical coupling or connection, may be logical coupling or connection, or may be a combination thereof. When two elements are used in the present specification, connecting or coupling the two elements to each other by using one or more wires, cables, and/or printed electrical connections and by using electromagnetic energy such as electromagnetic energy having wavelengths in a radio frequency region, a microwave region, and a light (both visible and invisible light) region as some non-limiting and non-inclusive examples is conceivable.

The statement "on the basis of' used in the present specification does not mean "on the basis of only" unless explicitly stated otherwise. In other words, the statement "on the basis of" means both "on the basis of only" and "on the basis of at least".

In a case in which the terms "first", "second", and the like are used in the present specification, any reference to the elements does not generally limit the number or order of the elements. These names can be used in the present specification as a convenient way of distinguishing between two or more elements. Thus, reference to the first and second elements does not mean that only these two elements can be adopted there or that the first element must precede the second element in some way.

"Include," "including," and variations thereof are intended to be inclusive similarly to the term "comprising" when these terms are used in the present specification or claims. Further, the term "or" used in the present specification or claims is intended to be not an exclusive OR.

In the present specification, it is assumed that a plurality of devices are included in cases other than a case in which there is clearly only one device in the context or technically.

In the entire disclosure, it is assumed that a plurality of things are included unless one thing is clearly indicated in the context.

### Reference Signs List

- 100:: Mobile terminal
- 101:: Accommodation unit
- 105:: Flexible display
- 106:: Mainspring
- 107:: Rotation angle sensor
- 108:: State determination unit
- 109:: Image processing unit
- 110:: Acceleration sensor
- 111:: Operation determination unit

## Claims

1. A mobile terminal comprising:
a flexible display (105) that is deformable into a roll shape;
a storage unit (101) configured to store the flexible display (105) in a roll shape by applying a force in a direction in which the flexible display (105) remains wound with a mainspring (106);
the flexible display (105) being in a contracted state in which the flexible display (105) is stored in the storage unit (101), an expanded state in which the flexible display (105) is drawn out from the storage unit (101) by a user, or a maximally expanded state in which the flexible display (105) is maximally drawn out by a user;
a rotation angle sensor (107) configured to detect absolute angles of rotation at a predetermined sampling rate corresponding to a sensor value according to a drawing out amount from a contracted state of the flexible display;
and
a display control means (109) configured to control a display size of display information to be displayed on the flexible display on the basis of the sensor value detected by the rotation angle sensor (107) and to set a reference value to zero when the flexible display is in the contracted state ;
wherein the display control means (109) is further configured, when the sensor value detected by the rotation angle sensor (107) is outside of a range defined as a +/- threshold value around the reference value, to change the display size and to update the reference value by adding a predetermined update value to the reference value when the sensor value increases from the reference value beyond the threshold value or by subtracting the predetermined update value from the reference value when the sensor value decreases from the reference value beyond the threshold value , the predetermined updating value being preferably equal to said threshold value;
the display control means (109) therewith being configured to not change the display size and not update the reference value when said sensor value is within the range.

2. The mobile terminal according to claim 1, wherein the display control means (109) sets the threshold value according to a state of the flexible display (105) determined on the basis of the sensor value detected by the rotation angle sensor (107).

3. The mobile terminal (100) according to claim 2, wherein, in a case in which a first value > a second value > a third value, the threshold value is set to the first value when the flexible display (105) is in a contracted state, the threshold value is set to the second value when the flexible display (105) is in an expanded state, and the threshold value is set to the third value when the flexible display (105) is in a maximally expanded state.

4. The mobile terminal (100) according to claim 3, comprising:
an operation detection means (110) configured to detect whether or not the flexible display (105) is being expanded or contracted,
wherein, when the operation detection means (110) detects that the flexible display (105) is being expanded or contracted, the display control means (109) is configured to set the threshold value to a fourth value smaller than the third value.

5. The mobile terminal (100) according to claim 3, comprising:
an operation detection means (110) configured to detect whether or not the flexible display (105) is being expanded or contracted,
wherein, when the operation detection means (110) detects that the flexible display (105) is being expanded or contracted, the display control means (109) is configured to perform control for changing the display size of the display information without using a threshold value.

## Patentansprüche

1. Mobiles Endgerät, umfassend:
eine flexible Anzeige (105), die in eine Rollenform verformbar ist;
eine Speichereinheit (101), die konfiguriert ist, um die flexible Anzeige (105) in einer Rollenform zu speichern, indem sie eine Kraft in einer Richtung ausübt, in der die flexible Anzeige (105) mit einer Aufzugfeder (106) aufgewickelt bleibt;
wobei die flexible Anzeige (105) sich in einem kontrahierten Zustand befinden kann, in dem die flexible Anzeige (105) in der Speichereinheit (101) gespeichert ist, oder sich in einem expandierten Zustand befinden kann, in dem die flexible Anzeige (105) von einem Benutzer aus der Speichereinheit (101) herausgezogen ist, oder in einem maximal expandierten Zustand befinden kann, in dem die flexible Anzeige (105) von einem Benutzer maximal herausgezogen ist;
einen Drehwinkelsensor (107), der konfiguriert ist, um mit einer vorbestimmten Abtastrate absolute Drehwinkel zu erfassen, die einem Sensorwert gemäß einem herausgezogenen Betrag aus einem kontrahierten Zustand der flexiblen Anzeige entsprechen; und
ein Anzeigesteuerungseinrichtung (109), die konfiguriert ist, um eine Anzeigegröße von auf der flexiblen Anzeige anzuzeigenden Anzeige-Informationen auf der Grundlage des von dem Drehwinkelsensor (107) erfassten Sensorwerts zu steuern und einen Referenzwert auf Null zu setzen, wenn sich die flexible Anzeige im kontrahierten Zustand befindet;
wobei die Anzeigesteuerungseinrichtung (109) ferner so konfiguriert ist, dass wenn der von dem Drehwinkelsensor (107) erfasste Sensorwert außerhalb eines Bereichs liegt, der als ein +/- Schwellenwert um den Referenzwert herum definiert ist, die Anzeigegröße ändert und den Referenzwert aktualisiert, indem sie einen vorbestimmten Aktualisierungswert zu dem Referenzwert addiert, wenn der Sensorwert von dem Referenzwert über den Schwellenwert hinaus zunimmt, oder indem sie den vorbestimmten Aktualisierungswert von dem Referenzwert subtrahiert, wenn der Sensorwert von dem Referenzwert über den Schwellenwert hinaus abnimmt, wobei der vorbestimmte Aktualisierungswert vorzugsweise gleich dem Schwellenwert ist;
wobei die Anzeigesteuerungseinrichtung (109) so konfiguriert ist, dass sie die Anzeigegröße nicht ändert und den Referenzwert nicht aktualisiert, wenn der Sensorwert innerhalb des Bereichs liegt.

2. Mobiles Endgerät nach Anspruch 1, wobei die Anzeigesteuerungseinrichtung (109) den Schwellenwert entsprechend einem Zustand der flexiblen Anzeige (105) einstellt, der auf der Grundlage des von dem Drehwinkelsensor (107) erfassten Sensorwertes bestimmt ist.

3. Mobiles Endgerät (100) nach Anspruch 2, wobei in einem Fall, in dem ein erster Wert > einem zweiten Wert > einem dritten Wert ist, der Schwellenwert auf den ersten Wert gesetzt wird, wenn sich die flexible Anzeige (105) in einem kontrahierten Zustand befindet, und der Schwellenwert auf den zweiten Wert gesetzt wird, wenn sich die flexible Anzeige (105) in einem expandierten Zustand befindet, und der Schwellenwert auf den dritten Wert gesetzt wird, wenn sich die flexible Anzeige (105) in einem maximal expandierten Zustand befindet.

4. Mobiles Endgerät (100) nach Anspruch 3, umfassend
eine Funktions-Erfassungseinrichtung (110), die konfiguriert ist, um zu erfassen, ob oder ob nicht die flexible Anzeige (105) expandiert oder kontrahiert wird,
wobei, wenn die Funktions-Erfassungseinrichtung (110) erfasst, dass die flexible Anzeige (105) expandiert oder kontrahiert wird, die Anzeigesteuerungseinrichtung (109) so konfiguriert ist, dass sie den Schwellenwert auf einen vierten Wert einstellt, der kleiner als der dritte Wert ist.

5. Mobiles Endgerät (100) nach Anspruch 3, umfassend:
eine Funktions-Erfassungseinrichtung (110), die konfiguriert ist, um zu detektieren, ob oder ob nicht die flexible Anzeige (105) expandiert oder kontrahiert wird,
wobei, wenn die Funktions-Erfassungseinrichtung (110) erfasst, dass die flexible Anzeige (105) expandiert oder kontrahiert wird, die Anzeigesteuerungseinrichtung (109) konfiguriert ist, um eine Steuerung zum Ändern der Anzeigegröße der Anzeige-Informationen ohne Verwendung eines Schwellenwerts durchzuführen.

## Revendications

1. Terminal mobile comprenant :
un dispositif d'affichage flexible (105) qui est déformable en une forme de rouleau ;
une unité de stockage (101) conçue pour stocker le dispositif d'affichage flexible (105) dans une forme de rouleau en appliquant une force dans une direction dans laquelle le dispositif d'affichage flexible (105) reste enroulé à l'aide d'un ressort principal (106) ;
le dispositif d'affichage flexible (105) étant dans un état contracté dans lequel le dispositif d'affichage flexible (105) est stocké dans l'unité de stockage (101), un état déployé dans lequel le dispositif d'affichage flexible (105) est étiré hors de l'unité de stockage (101) par un utilisateur, ou
un état déployé au maximum dans lequel le dispositif d'affichage flexible (105) est étiré au maximum par un utilisateur ;
un capteur d'angle de rotation (107) conçu pour détecter des angles de rotation absolus à un taux d'échantillonnage prédéterminé correspondant à une valeur de capteur selon une quantité d'étirage à partir d'un état contracté du dispositif d'affichage flexible ;
et
un moyen de commande d'affichage (109) conçu pour commander une taille d'affichage d'affichage d'informations à afficher sur le dispositif d'affichage flexible sur la base de la valeur de capteur détectée par le capteur d'angle de rotation (107) et pour régler une valeur de référence sur zéro lorsque le dispositif d'affichage flexible est dans l'état contracté ;
dans lequel le moyen de commande d'affichage (109) est en outre conçu, lorsque la valeur de capteur détectée par le capteur d'angle de rotation (107) est en dehors d'une plage définie comme une valeur de seuil +/autour de la valeur de référence, pour modifier la taille d'affichage et pour mettre à jour la valeur de référence en ajoutant une valeur de mise à jour prédéterminée à la valeur de référence lorsque la valeur de capteur augmente par rapport à la valeur de référence au-delà de la valeur de seuil ou en soustrayant la valeur de mise à jour prédéterminée de la valeur de référence lorsque la valeur de capteur diminue par rapport à la valeur de référence au-delà de la valeur de seuil, la valeur de mise à jour prédéterminée étant de préférence égale à ladite valeur de seuil ;
le moyen de commande d'affichage (109) avec celui-ci étant conçu pour ne pas modifier la taille d'affichage et ne pas mettre à jour la valeur de référence lorsque ladite valeur de capteur est comprise dans la plage.

2. Terminal mobile selon la revendication 1, dans lequel le moyen de commande d'affichage (109) règle la valeur de seuil conformément à un état du dispositif d'affichage flexible (105) déterminé sur la base de la valeur de capteur détectée par le capteur d'angle de rotation (107).

3. Terminal mobile (100) selon la revendication 2, dans lequel, dans un cas où une première valeur > une deuxième valeur > une troisième valeur, la valeur de seuil est réglée sur la première valeur lorsque le dispositif d'affichage flexible (105) est dans un état contracté, la valeur de seuil est réglée sur la deuxième valeur lorsque le dispositif d'affichage flexible (105) est dans un état déployé, et la valeur de seuil est réglée sur la troisième valeur lorsque le dispositif d'affichage flexible (105) est dans un état déployé au maximum.

4. Terminal mobile (100) selon la revendication 3, comprenant :
un moyen de détection d'opération (110) conçu pour détecter si le dispositif d'affichage flexible (105) est déployé ou contracté,
dans lequel, lorsque le moyen de détection d'opération (110) détecte que le dispositif d'affichage flexible (105) est déployé ou contracté, le moyen de commande d'affichage (109) est conçu pour régler la valeur de seuil sur une quatrième valeur inférieure à la troisième valeur.

5. Terminal mobile (100) selon la revendication 3, comprenant :
un moyen de détection d'opération (110) conçu pour détecter si le dispositif d'affichage flexible (105) est déployé ou contracté,
dans lequel, lorsque le moyen de détection d'opération (110) détecte que le dispositif d'affichage flexible (105) est déployé ou contracté, le moyen de commande d'affichage (109) est conçu pour exécuter une commande de modification de la taille d'affichage de l'affichage des informations sans utiliser une valeur de seuil.
